# FASCICULE DE BREVET EUROPEEN

(11) **EP 1 726 805 B1**
(45) Date de publication et mention de la délivrance du brevet: **23.03.2011**
(21) Numéro de dépôt: 06290734.0
(22) Date de dépôt: 04.05.2006
(51) Int. Cl.: F02D 13/02, F02B 25/22

(54) **Procédé de contrôle du balayage des gaz brûlés d'un moteur à injection indirecte, notamment moteur suralimenté, et moteur utilisant un tel procédé**
Verfahren zur Steuerung der Spülung eines insbesondere aufgeladenen Motors mit Saugroheinspritzung und ein ein solches Verfahren verwendender Motor
Method to control the exhaust gas scavenging of an engine with indirect injection, in particular supercharged engine, and engine using such a method

(30) Priorité: 24.05.2005 FR 0505237
(43) Date de publication de la demande: 29.11.2006
(73) Titulaire: Institut Français du Pétrole, 92852 Rueil Malmaison Cedex (FR)
(72) Inventeur: Pagot, Alexandre, 92500 Rueil Malmaison (FR)

(56) Documents cités:
- FR-A- 2 720 113
- FR-A- 2 841 294
- US-A- 4 217 866
- US-A- 4 488 531
- US-A- 4 548 175
- US-A- 4 732 116
- US-B1- 6 470 681
- PATENT ABSTRACTS OF JAPAN vol. 2000, no. 13, 5 février 2001 (2001-02-05) -& JP 2000 274252 A (HONDA MOTOR CO LTD), 3 octobre 2000 (2000-10-03)
- PATENT ABSTRACTS OF JAPAN vol. 2003, no. 12, 5 décembre 2003 (2003-12-05) -& JP 2005 180285 A (FUJI HEAVY IND LTD), 7 juillet 2005 (2005-07-07)

## Description

La présente invention se rapporte à un procédé de contrôle du balayage des gaz brûlés d'un moteur à combustion interne à injection indirecte à au moins deux moyens d'admission, notamment d'un moteur suralimenté, en particulier à allumage commandé.

Comme cela est connu, la puissance délivrée par un moteur à combustion interne est fonction de la quantité d'air introduite dans la chambre de combustion de ce moteur. Cette quantité d'air est elle-même proportionnelle à la densité de cet air. De ce fait, en cas de demande de forte puissance, il est prévu d'augmenter cette quantité d'air au moyen d'une compression de l'air avant qu'il ne soit admis dans cette chambre de combustion. Cette opération est plus communément appelée suralimentation et peut être réalisée par un dispositif de suralimentation comme un turbocompresseur ou un compresseur entraîné, tel qu'un compresseur à vis.

Afin d'augmenter encore plus cette quantité d'air admise dans le cylindre, il est prévu de réaliser un mode d'admission avec une phase de balayage des gaz brûlés résiduels. Ce balayage permet, avant la fin du cycle d'échappement du moteur, d'évacuer les gaz brûlés présents dans la chambre de combustion pour les remplacer par de l'air suralimenté.

Il est déjà connu par les documents US-A-4 548 175, US-A-4 732 116 et US-A-4 488 531 des moteurs qui comportent deux moyens d'admission comportant chacun un injecteur de carburant pour réaliser un mélange carburé stratifié dans la chambre de combustion du cylindre.

Cependant, ce type de moteurs ne permet pas de réaliser une phase de balayage de gaz brûlés qui nécessite un croisement des soupapes d'admission et d'échappement.

Comme cela est explicité dans le brevet US 4 217 866, la phase de balayage consiste à réaliser, en fin de cycle d'échappement du moteur et en début de cycle d'admission, un croisement entre les soupapes d'échappement et d'admission d'un même cylindre Ce croisement est réalisé en ouvrant simultanément ces soupapes d'échappement et d'admission pendant quelques degrés à quelques dizaines de degrés d'angle de rotation de vilebrequin.

Dans l'exemple du moteur suralimenté à injection indirecte de carburant décrit dans ce document, il est prévu au moins un moyen d'échappement des gaz brûlés avec une soupape d'échappement contrôlant une tubulure d'échappement et au moins deux moyens d'admission. L'un des moyens d'admission est un moyen d'admission d'air suralimenté non carburé avec une tubulure et une soupape et l'autre des moyens d'admission est un moyen d'admission d'air carburé, constitué d'une tubulure portant un injecteur de carburant et d'une soupape.

Le balayage des gaz brûlés est réalisé, d'une part, grâce au croisement de la soupape d'échappement et de la soupape d'admission d'air suralimenté non carburé, la soupape d'admission d'air carburé restant fermée et, d'autre part, par le fait que la pression de l'air au niveau de la soupape d'admission ouverte est plus élevée que la pression des gaz d'échappement encore présents dans la chambre de combustion. L'air suralimenté non carburé qui est admis dans la chambre de combustion balaye ces gaz pour les évacuer au travers de la soupape d'échappement. De ce fait, de l'air suralimenté non carburé occupe le volume libéré par ces gaz d'échappement, ce qui permet une augmentation non négligeable de la quantité d'air introduite pendant le cycle d'admission du moteur. Au voisinage de la fin de la phase de balayage, la soupape d'échappement se ferme, la soupape d'admission d'air suralimenté carburé s'ouvre, l'injecteur de carburant est activé et de l'air suralimenté carburé est admis dans la chambre de combustion par l'autre moyen d'admission en complément de l'air suralimenté non carburé qui y est admis.

Ce type de moteur bien que donnant satisfaction présente néanmoins des inconvénients non négligeables.

En effet, lors du fonctionnement conventionnel du moteur qui suit cette phase de balayage et qui ne nécessite pas de phase de balayage, les deux soupapes d'admission restent simultanément ouvertes pendant les cycles d'admission du moteur. Ceci a pour effet d'introduire un air carburé par une tubulure et de l'air non carburé par l'autre tubulure. Dans la chambre de combustion, le mélange avec ces deux types d'air se réalise difficilement et d'une façon telle qu'il ne soit pas homogène. Ce manque d'homogénéité a pour effet de créer des polluants lors de la combustion de ce mélange. De plus, pour obtenir une richesse moyenne voisine de 1 du mélange carburé dans la chambre de combustion, il est nécessaire d'injecter une grande quantité de carburant dans la tubulure d'admission d'air carburé avec une richesse voisine de 2. Cette grande quantité de carburant a pour effet, lors du démarrage à froid du moteur, de générer des polluants sous la forme d'hydrocarbures imbrûlés (HC) lors de la combustion du mélange dans la chambre de combustion.

La présente invention se propose de remédier aux inconvénients mentionnés ci-dessus grâce à un procédé de contrôle de l'admission d'air du moteur qui permette une meilleure homogénéisation du mélange carburé contenue dans la chambre de combustion et une réduction de la consommation de carburant ainsi que des émissions de polluants.

Ainsi, la présente invention concerne un procédé de contrôle d'un moteur à injection indirecte, notamment moteur suralimenté, en particulier à allumage commandé, comprenant au moins un cylindre comportant une chambre de combustion, au moins deux moyens d'admission d'air comportant chacun une tubulure contrôlée par une soupape d'admission, au moins un moyen d'injection de carburant associé à chaque moyen d'admission et au moins un moyen d'échappement de gaz brûlés avec une soupape d'échappement, ledit moteur fonctionnant selon deux modes d'admission, un mode avec balayage des gaz brûlés et un mode hors balayage, caractérisé en ce qu'il consiste :
- à admettre, en mode d'admission avec balayage, de l'air non carburé par l'un des moyens d'admission puis, au voisinage de la fin du balayage, à admettre de l'air carburé par l'autre des moyens d'admission;
- à admettre, en mode d'admission hors balayage, de l'air carburé par les deux moyens d'admission.

Avantageusement, le balayage des gaz brûlés peut consister à réaliser le croisement de la soupape d'admission de l'un des moyens d'admission avec la soupape d'échappement en association avec une pression de l'air à l'admission supérieure à la pression des gaz à l'échappement.

Le procédé peut consister à admettre, en mode d'admission hors balayage, un air carburé avec une richesse voisine de 1 par chacun des deux moyens d'admission.

L'invention concerne également un moteur à combustion interne à injection indirecte, notamment moteur suralimenté, en particulier à allumage commandé, comprenant au moins un cylindre comportant une chambre de combustion, au moins un moyen d'admission comportant une tubulure contrôlée par une soupape d'admission, au moins un moyen d'injection de carburant associé au moyen d'admission pour admettre de l'air carburé dans le cylindre et au moins un moyen d'échappement de gaz brûlés avec une soupape d'échappement, caractérisé en ce qu'il comprend en outre un autre moyen d'admission avec une injection contrôlée de carburant ainsi que des moyens de contrôle pour admettre, en mode d'admission avec balayage des gaz brulés, de l'air non carburé par l'un des moyens d'admission puis, au voisinage de la fin du balayage, à admettre de l'air carburé par l'autre des moyens d'admission, et pour admettre, en mode admission hors balayage, de l'air carburé par les deux moyens d'admission.

Les autres caractéristiques et avantages de l'invention apparaîtront mieux à la lecture de la description qui va suivre, donnée à titre uniquement illustratif et nullement limitatif, en se référant aux dessins annexés pour lesquels :
- la figure 1 est une vue schématique d'un moteur à combustion interne selon l'invention et
- la figure 2 est un graphique montrant les courbes des lois de levée (L) des soupapes d'un même cylindre en fonction de la position (V) du vilebrequin du moteur selon l'invention.

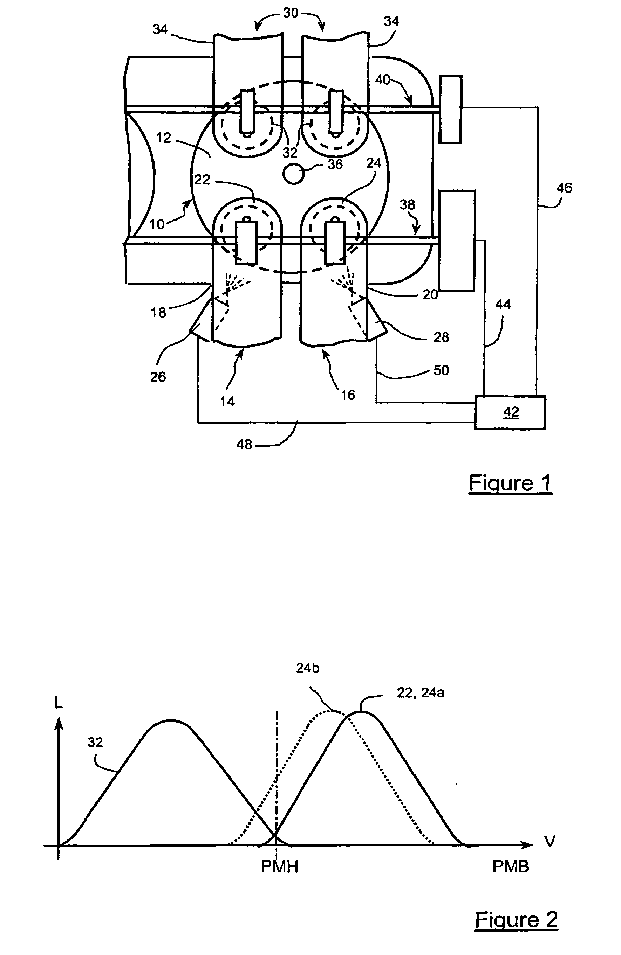

La figure 1 montre un moteur à combustion interne suralimenté, notamment de type à injection indirecte d'essence et en particulier à allumage commandé. Ce moteur comprend au moins un cylindre 10 à l'intérieur duquel coulisse un piston (non représenté) et une chambre de combustion 12 dans laquelle se produit la combustion d'un mélange d'air suralimenté et de carburant ou d'air suralimenté additionné de gaz d'échappement recirculés (EGR) et de carburant.

Le cylindre 10 comprend au moins deux moyens d'admission d'air suralimenté 14, 16, un moyen d'admission 14, dit moyen conventionnel, qui autorise l'admission d'air suralimenté carburé (ou d'air carburé) et un autre moyen d'admission 16, dit moyen d'admission à injection de carburant contrôlé, permettant d'introduire un air suralimenté (ou un air) qui peut être soit un air suralimenté carburé (ou un air carburé), soit un air suralimenté non carburé. Conventionnellement, ces moyens d'admission sont formés par un orifice prévu dans la culasse que comporte généralement ce moteur, une tubulure 18, 20 en communication avec cet orifice et un moyen d'obturation 22, 24 dudit orifice, tel qu'une soupape d'admission. Un moyen d'injection de carburant 26, 28 permet d'introduire un carburant dans la tubulure 18, 20 de façon à ce qu'il se mélange avec l'air qui y circule. Ainsi, le moyen d'admission conventionnel 14 comprend la tubulure 18, la soupape 22 et l'injecteur 26 alors que le moyen d'admission à injection de carburant contrôlé 16 comprend la tubulure 20, la soupape 24 et l'injecteur 28. Ce cylindre comprend également un moyen d'échappement de gaz brûlés, ici deux moyens d'échappement 30, comportant chacun des moyens d'obturation, par exemple des soupapes d'échappement 32, et des tubulures d'échappement 34. Dans l'exemple illustré à la figure 1, le cylindre comprend aussi un moyen d'allumage, tel qu'une bougie 36, permettant d'initier la combustion du mélange carburé contenu dans la chambre de combustion 12.

Les soupapes d'admission 22, 24 et les soupapes d'échappement 32 sont commandées par des moyens, respectivement 38 et 40, permettant de faire varier les lois de levées de ces soupapes, tant au niveau de leurs moments d'ouverture/fermeture qu'au niveau de leurs levées, et cela indépendamment les unes des autres ou de manière associée. Ces moyens sont plus connus sous le sigle de VVT (Variable Valve Timing) ou VVL (Variable Valve Lift) ou VVA (Variable Valve Actuation). Préférentiellement, des moyens de type VVT seront utilisés.

Les moyens de commande 38 et 40 sont pilotés par une unité de contrôle 42, telle que le calculateur-moteur que comporte habituellement un moteur. Ce calculateur comprend des cartographies ou des tables qui permettent de modifier, en fonction des conditions de fonctionnement du moteur, les lois de levée de soupapes grâce à des lignes de commandes 44 et 46 contrôlant respectivement les moyens 38 et 40. Ce calculateur commande également l'activation ou la désactivation des injecteurs 26, 28 par l'intermédiaire de lignes de commande 48, 50.

En fonctionnement et en cas de variation de puissance requise par le moteur ou dans la configuration de fonctionnement de ce moteur selon laquelle il se trouve à bas ou à moyen régime et à forte charge, le moteur fonctionne en air suralimenté selon un mode d'admission avec balayage des gaz brûlés. Dans ce cas, le calculateur 42 déclenche une phase de croisement des soupapes avec balayage des gaz brûlés. Pour cela et en se référant en plus à la figure 2, le calculateur commande, au voisinage du point mort haut PMH échappement, les moyens de variations des lois de levées 38, 40 des soupapes d'une manière telle que les soupapes d'échappement 32 soient ouvertes, la soupape d'admission 22 du moyen d'admission conventionnel 14 soit fermée et la soupape d'admission 24 du moyen d'admission contrôlé 16 s'ouvre, comme montré par la courbe 24b en traits pointillés sur cette figure 2. Pendant ce croisement de soupapes, le calculateur commande également les injecteurs 26, 28 de façon à ce qu'ils ne soient pas actifs. Sous l'effet du différentiel de pression entre la pression de l'air suralimenté non carburé introduite dans la chambre de combustion au travers de la soupape 24 et celle des gaz brûlés résiduels présents dans cette chambre, ces derniers sont expulsés de la chambre 12 pour être évacués au travers des soupapes 32. Ceci permet donc le balayage des gaz brûlés résiduels présents dans la chambre de combustion 12 et le remplacement de ceux-ci par de l'air suralimenté dépourvu de carburant.

Dès que la phase de balayage des gaz brûlés est terminée, les soupapes d'échappement 32 sont fermées sous l'effet du moyen de commande 40, la soupape d'admission 24 du moyen d'admission contrôlé 16 reste ouverte (courbe 24b) et la soupape d'admission 22 du moyen d'admission conventionnel 14 s'ouvre sous l'action du moyen de commande 38. Simultanément, le calculateur 42 commande en activation l'injecteur 26 et ainsi du carburant est injecté dans la tubulure 18 et un mélange carburé est introduit dans la chambre de combustion 12. De façon à améliorer l'introduction d'air carburé dans cette chambre de combustion, il peut être prévu d'injecter du carburant dans la tubulure 18, en avance par rapport au cycle, alors que la soupape d'admission 22 est encore fermée et avant la fermeture des soupapes d'échappement 32. Ainsi, l'air contenu dans la tubulure d'admission 18 est un air carburé et, à la fermeture de ces soupapes d'échappement et à l'ouverture de la soupape d'admission 22, cet air préalablement carburé va être introduit dans la chambre de combustion.

En cas de fonctionnement conventionnel du moteur, c'est-à-dire en mode d'admission sans balayage de gaz brûlés, notamment pendant la marche au ralenti du moteur, le calculateur 42 commande les moyens de commande 38 et 40 de façon classique. Plus précisément, au voisinage du point mort haut (PMH) échappement du piston, les soupapes d'échappement 32 se ferment, la soupape d'admission 22 du moyen d'admission conventionnel 14 ainsi que la soupape d'admission 24 (courbe 24a) du moyen d'admission à injection de carburant contrôlé 16 s'ouvrent au moment de la fermeture des soupapes d'échappement. Simultanément, le calculateur commande l'activation des deux injecteurs de carburant 26 et 28 pour injecter du carburant dans les tubulures 18 et 20 et obtenir un mélange carburé dans chacune des tubulures. Préférentiellement, l'injection de carburant se réalise dans chacune des tubulures de manière à obtenir au niveau des soupapes d'admission 22, 24 un mélange carburé avec une richesse voisine de 1.

Grâce à cela, le mélange obtenu dans la chambre de combustion est un mélange homogène même après la réalisation d'une phase de balayage des gaz brûlés.

La présente invention n'est pas limitée à l'exemple décrit mais englobe toutes variantes et tous équivalents.

Notamment, comme illustré à titre d'exemple sur la figure 2, il est prévu que la loi de levée de la soupape 24 suive deux courbes sous l'action du moyen de commande 38, une courbe 24b pour le mode d'admission avec balayage et une courbe 24a pour le mode d'admission hors balayage mais il peut être envisagé d'utiliser un arbre à cames décalées en lieu et place du moyen de commande 38. Un tel arbre à cames permet donc de positionner, pendant les modes d'admission avec balayage et hors balayage, la soupape 24 uniquement selon la courbe 24b, la courbe 22 restant inchangée. De ce fait, ce croisement de soupapes n'autorisera le balayage des gaz brûlés que dans le cas où la pression de l'air au niveau de la soupape d'admission est supérieure à la pression des gaz d'échappement au niveau de la soupape d'échappement 36. Ceci est généralement le cas à bas et moyen régime et à fortes charges.

## Revendications

1. Procédé de contrôle d'un moteur à injection indirecte, notamment moteur suralimenté, en particulier à allumage commandé, comprenant au moins un cylindre (10) comportant une chambre de combustion (12), au moins deux moyens d'admission d'air (14, 16) comportant chacun une tubulure (18, 20) contrôlée par une soupape d'admission (22, 24), au moins un moyen d'injection de carburant (26, 28) associé à chaque moyen d'admission et au moins un moyen d'échappement de gaz brûlés (30) avec une soupape d'échappement (32), ledit moteur fonctionnant selon deux modes d'admission, un mode avec balayage des gaz brûlés et un mode hors balayage, **caractérisé en ce qu'**il consiste :
- à admettre, en mode d'admission avec balayage, de l'air non carburé par l'un (16) des moyens d'admission puis, au voisinage de la fin du balayage, à admettre de l'air carburé par l'autre (14) des moyens d'admission;
- à admettre, en mode d'admission hors balayage, de l'air carburé par les deux moyens d'admission (14, 16).

2. Procédé de contrôle d'un moteur selon la revendication 1, **caractérisé en ce que** le balayage des gaz brûlés consiste à réaliser le croisement de la soupape d'admission (24) de l'un des moyens d'admission avec la soupape d'échappement (32) en association avec une pression de l'air à l'admission (16, 24) supérieure à la pression des gaz à l'échappement (30, 32).

3. Procédé de contrôle d'un moteur selon la revendication 1, **caractérisé en ce qu'**il consiste à admettre, en mode d'admission hors balayage, un air carburé avec une richesse voisine de 1 par chacun des deux moyens d'admission (14, 16).

4. Moteur à combustion interne à injection indirecte, notamment moteur suralimenté, en particulier à allumage commandé, comprenant au moins un cylindre (10) comportant une chambre de combustion (12), au moins un moyen d'admission (14) comportant une tubulure (18, 20) contrôlée par une soupape d'admission (22, 24), au moins un moyen d'injection de carburant (26, 28) associé au moyen d'admission pour admettre de l'air carburé dans le cylindre (10) et au moins un moyen d'échappement de gaz brûlés (30) avec une soupape d'échappement (32), **caractérisé en ce qu'**il comprend en outre un autre moyen d'admission (16) avec une injection contrôlée de carburant ainsi que des moyens de contrôle (42) pour admettre, en mode d'admission avec balayage des gaz brulés, de l'air non carburé par l'un (16) des moyens d'admission puis, au voisinage de la fin du balayage, à admettre de l'air carburé par l'autre (14) des moyens d'admission, et pour admettre, en mode admission hors balayage, de l'air carburé par les deux moyens d'admission (14, 16).

## Claims

1. A method of controlling an engine with indirect injection, in particular a supercharged engine, in particular with controlled ignition, including at least one cylinder (10) comprising a combustion chamber (12), at least two air intake means (14, 16) each comprising a pipe (18, 20) controlled by an intake valve (22, 24), at least one means for injection of fuel (26, 28) associated with each intake means and at least one means for exhaust of burned gases (30) with an exhaust valve (32), said engine operating in two intake modes, one mode with scavenging of the burned gases and one mode without scavenging, **characterised in that** it consists:
- in taking in, in the intake mode with scavenging, non-carburetted air through one (16) of the intake means and then, towards the end of the scavenging, in taking in carburetted air through the other (14) of the intake means;
- in taking in the intake mode without scavenging, carburetted air through both intake means (14, 16).

2. The method of controlling an engine in accordance with claim 1, **characterised in that** the scavenging of the burned gases consists in achieving the overlap of the intake valve (24) of one of the intake means with the exhaust valve (32) in association with an air pressure at the intake (16, 24) greater than the pressure of the gases at the exhaust (30, 32).

3. The method of controlling an engine in accordance with claim 1, **characterised in that** it consists of taking in, in the intake mode without scavenging, carburetted air with a richness dose to 1 through each of the two intake means (14, 16).

4. An internal combustion engine with indirect injection, in particular a supercharged engine, in particular with controlled ignition, including at least one cylinder (10) comprising a combustion chamber (12), at least one intake means (14) comprising a pipe (18, 20) controlled by an intake valve (22, 24), at least one means for injection of fuel (26, 28) associated with the intake means for taking in carburetted air into the cylinder (10) and at least one means for exhaust of burned gases (30) with an exhaust valve (32), **characterised in that** it includes in addition another intake means (16) with controlled injection of fuel as well as control means (42) for taking in, in the intake mode with scavenging of the burned gases, non-carburetted air through one (16) of the intake means and then, towards the end of the scavenging, taking in carburetted air through the other (14) of the intake means, and for taking in, in the intake mode without scavenging, carburetted air through both intake means (14, 16).

## Patentansprüche

1. Verfahren zur Steuerung eines Motors mit indirekter Einspritzung, insbesondere eines Auflademotors insbesondere mit Fremdzündung, umfassend mindestens einen Zylinder (10) mit einem Brennraum (12), mindestens zwei Luftansaugmittel (14, 16), jedes mit einem Ansaugrohr (18, 20), das durch ein Einlassventil (22, 24) gesteuert wird, mindestens ein Kraftstoffeinspritzmittel (26, 28), das jedem Einlassmittel zugeordnet ist, und mindestens ein Auslassmittel für Abgase (30) mit einem Auslassventil (32), wobei dieser Motor in zwei Ansaugmodi arbeitet, einem Modus mit Abgasspülung und einem Modus ohne Spülung, **dadurch gekennzeichnet, dass** es darin besteht:
- im Ansaugmodus mit Spülung kraftstofffreie Luft durch das eine (16) der Einlassmittel einzulassen, dann gegen Ende der Spülung ein Luft-Kraftstoff-Gemisch durch das andere (14) der Einlassmittel einzulassen;
- im Ansaugmodus ohne Spülung ein Luft-Kraftstoff-Gemisch durch beide Einlassmittel (14, 16) einzulassen.

2. Verfahren zur Steuerung eines Motors nach Anspruch 1, **dadurch gekennzeichnet dass** die Abgasspülung darin besteht, die Überschneidung des Einlassventils (24) eines der Einlassmittel mit dem Auslassventil (32) durchzuführen, wobei der Luftdruck an den Einlassmitteln (16, 24) höher ist als der Abgasdruck an den Auslassmitteln (30, 32).

3. Verfahren zur Steuerung eines Motors nach Anspruch 1, **dadurch gekennzeichnet dass** es darin besteht, im Ansaugmodus ohne Spülung durch jedes der zwei Einlassmittel (14, 16) ein Luft-Kraftstoff-Gemisch mit einer Fettheit in der Nachbarschaft von 1 einzulassen.

4. Motor mit indirekter Einspritzung, insbesondere ein Auflademotor insbesondere mit Fremdzündung, umfassend mindestens einen Zylinder (10) mit einem Brennraum (12), mindestens ein Einlassmittel (14) mit einem Ansaugrohr (18, 20), das durch ein Einlassventil (22, 24) gesteuert wird, mindestens ein Kraftstoffeinspritzmittel (26, 28), das dem Einlassmittel zugeordnet ist, um ein Luft-Kraftstoff-Gemisch in den Zylinder (10) einzulassen, und mindestens ein Auslassmittel für Abgase (30) mit einem Auslassventil (32), **dadurch gekennzeichnet, dass** er außerdem ein anderes Einlassmittel (16) mit einer geregelten Kraftstoffeinspritzung umfasst, sowie Steuermittel (42), um im Ansaugmodus mit Abgasspülung kraftstofffreie Luft durch eines (16) der Einlassmittel einzulassen, dann gegen Ende der Spülung ein Luft-Kraftstoff-Gemisch durch das andere (14) der Einlassmittel einzulassen, und um im Ansaugmodus ohne Spülung ein Luft-Kraftstoff-Gemisch durch beide Einlassmittel (14, 16) einzulassen.
